(19) Europäisches Patentamt
European Patent Office
Office européen des brevets

(11) **EP 3 625 045 B1**

(12) **EUROPÄISCHE PATENTSCHRIFT**

(45) Veröffentlichungstag und Bekanntmachung des Hinweises auf die Patenterteilung:
**20.01.2021 Patentblatt 2021/03**

(21) Anmeldenummer: **17726568.3**

(22) Anmeldetag: **16.05.2017**

(51) Int Cl.:
*C21D 9/46* (2006.01)    *B32B 15/01* (2006.01)
*C22C 38/02* (2006.01)    *C22C 38/04* (2006.01)
*C22C 38/06* (2006.01)    *C22C 38/22* (2006.01)
*C22C 38/26* (2006.01)    *C22C 38/28* (2006.01)
*C22C 38/32* (2006.01)    *C22C 38/38* (2006.01)
*C23C 2/12* (2006.01)

(86) Internationale Anmeldenummer:
**PCT/EP2017/061772**

(87) Internationale Veröffentlichungsnummer:
**WO 2018/210414 (22.11.2018 Gazette 2018/47)**

(54) **WARMUMFORMMATERIAL, BAUTEIL UND VERWENDUNG**

HOT-WORKING MATERIAL, COMPONENT AND USE

MATÉRIAU DE FORMAGE À CHAUD, PIÈCE ET UTILISATION CORRESPONDANTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**25.03.2020 Patentblatt 2020/13**

(73) Patentinhaber:
• **ThyssenKrupp Steel Europe AG**
  **47166 Duisburg (DE)**
• **thyssenkrupp AG**
  **45143 Essen (DE)**

(72) Erfinder:
• **BECKER, Jens-ulrik**
  **47058 Duisburg (DE)**
• **MYSLOWICKI, Stefan**
  **41238 Mönchengladbach (DE)**

(74) Vertreter: **ThyssenKrupp Steel Europe AG**
**Patente/Patent Department**
**Kaiser-Wilhelm-Straße 100**
**47166 Duisburg (DE)**

(56) Entgegenhaltungen:
EP-A1- 2 886 332          DE-A1-102014 114 365
DE-A1-102015 116 619     DE-B3-102015 114 989

**EP 3 625 045 B1**

**Beschreibung**

**Technisches Gebiet**

Die Erfindung betrifft ein Warmumformmaterial aus einem dreilagigen Werkstoffverbund.

**Technischer Hintergrund**

In der Automobilindustrie wird nach neuen Lösungen zur Reduzierung des Fahrzeuggewichts und damit einhergehend zur Reduzierung des Kraftstoffverbrauchs gesucht. Leichtbau ist dabei ein wesentlicher Baustein, um das Fahrzeuggewicht senken zu können. Dies kann unter anderem durch den Einsatz von Werkstoffen mit gesteigerter Festigkeit erzielt werden. Mit dem Anstieg der Festigkeit nimmt in der Regel dessen Biegevermögen ab. Um trotz gesteigerter Festigkeit zur Realisierung von Leichtbau auch den bei crashrelevanten Bauteilen erforderlichen Insassenschutz sicherzustellen, ist zu gewährleisten, dass die eingesetzten Werkstoffe die durch einen Crash eingeleitete Energie durch Deformation umwandeln können. Dies bedingt ein hohes Maß an Umformvermögen insbesondere in den crashrelevanten Bauteilen einer Fahrzeugstruktur. Eine Möglichkeit, Gewicht einzusparen, ist beispielsweise die Karosserie und/oder das Fahrwerk eines landgebundenen Fahrzeugs noch leichter, durch innovative Werkstoffe im Vergleich zu den konventionell eingesetzten Werkstoffen zu gestalten bzw. zu bauen. So können beispielsweise bauteilspezifisch konventionelle Werkstoffe durch Werkstoffe mit dünneren Wandstärken mit optimierten Eigenschaften ersetzt werden. Beispielsweise werden Warmumformstähle, insbesondere Mangan-Bor-Stähle, beispielsweise der Güte 22MnB5 eingesetzt, die im pressgehärteten Zustand Zugfestigkeiten von ca. 1500 MPa und Streckgrenzen von ca. 1100 MPa aufweisen. Das Potenzial in Sachen Festigkeitssteigerung ist noch lange nicht erschöpft, so dass durch entsprechende Legierungskonzepte bzw. alternativ oder zusätzlich durch Optimierung der Herstellungsroute Möglichkeiten bestehen, Zugfestigkeiten von bis zu 1900 MPa und höher zu erreichen bzw. einstellen zu können. In der Regel werden die Warmumformstähle für den späteren Einsatz oder ihre Verarbeitung mit einem zink- oder aluminiumbasierten, metallischen Überzug versehen. Bedingt hierdurch können die Eigenschaften, wie z.B. die Duktilität, des Stahlwerkstoffes im pressgehärteten und zu einem Bauteil geformten Zustand im Vergleich zu einem unbeschichteten Stahlwerkstoff im pressgehärteten Zustand negativ verändert sein. Hierdurch wird das erreichbare Leichtbaupotenzial gemindert, weil zum Beispiel der Verlust an Duktilität durch eine geringer ausfallende Reduktion der Materialdicke kompensiert werden muss, um nach wie vor im Fall eines Crashs ein sicheres Bauteilverhalten unter Einsatzbedingungen zu gewährleisten.

Bei der Warmumformung werden konventionell zugeschnittene Stahlplatinen auf Austenitisierungstemperatur erwärmt, um sie anschließend in einem gekühlten Werkzeug gleichzeitig warm umzuformen und abzukühlen. Durch eine intensive Abkühlung, wobei Abkühlraten beispielsweise bei einem 22MnB5 von mindestens 27 K/s erforderlich sind, wandelt das Gefüge von Austenit vollständig in Martensit um und der zum Bauteil verarbeitete Werkstoff erhält im pressgehärteten Zustand seine angestrebte hohe Festigkeit. Dieses Verfahren ist in den Fachkreisen auch unter dem Begriff Presshärten bekannt. Die hierzu eingesetzten Stähle werden in der Regel mit einem aluminiumbasierten Überzug, beispielsweise einem AlSi-Überzug versehen, um beim Erwärmen der Stahlplatine auf Austenitisierungstemperatur eine unerwünschte Zunderbildung zu vermeiden. So kann erreicht werden, dass Bauteile zum späteren Einbau in eine Fahrzeugstruktur beispielsweise mittels Widerstandspunktschweißen und für eine ausreichende Lackhaftung nicht, z.B. mittels Strahlen, von anhaftendem Zunder befreit werden müssen. Zusätzlich bildet der AlSi-Überzug unter Einsatzbedingungen durch eine Barrierewirkung einen Beitrag zum Schutz des Bauteils vor Korrosion.

Beim Erwärmen der Stahlplatine auf Austenitisierungstemperatur sind beispielsweise für die Wahl der Verweilzeit der Stahlplatine in einem Erwärmungsofen zwei Randbedingungen zu berücksichtigen. Zum einen muss gewährleistet werden, dass die Stahlplatine vollständig durchwärmt ist und andererseits muss sichergestellt sein, dass ein vollständiges Durchlegieren des AlSi-Überzuges erreicht wird.

Die für die Warmumformung konzipierten Stähle besitzen ein auf Kohlenstoff, Mangan und Bor basierendes Legierungskonzept. Die seitens der Anmelderin unter der Handelsbezeichnung angebotenen MBW 1500 und MBW 1900 erreichen im pressgehärteten Zustand Zugfestigkeiten von etwa 1500 bzw. 1900 MPa. Bei beiden Werkstoffen kann nach dem Presshärten von unbeschichtetem und mit AlSi-beschichtem Werkstoff ein Unterschied der verbliebenen Restduktilität gefunden werden. Dies lässt sich zum Beispiel im Plättchenbiegetest gemäß VDA 238-100 in einem verringerten Biegewinkel des AlSi-beschichten Werkstoffs gegenüber dem unbeschichteten Werkstoff nachweisen. Die Ursache hierzu ist darin zu sehen, dass es beim unbeschichteten Werkstoff während des Presshärtevorgangs zu einer geringen Randentkohlung des Stahls kommen kann. Hierdurch bedingt, stellt sich innerhalb dieser entkohlten Randschicht nach dem Abkühlen im Umformwerkzeug lokal eine geringere Härte als im nicht entkohlten Bereich im Inneren des Werkstoffs ein, wobei sich ein martensitisches Gefüge geringerer Härte oder gar ein bainitisches Gefüge ausbilden kann. Beide Gefügeausprägungen haben im Vergleich zum Martensit des nicht entkohlten Bereiches im Inneren eine vergleichsweise höhere Restduktilität, die unter einer Biegebelastung eine geringere Anfälligkeit gegen die Bildung erster Anrisse besitzt. Dieser Vorgang der Randentkohlung tritt insbesondere bei AlSi-beschichtetem Werkstoff durch das Vorliegen des Überzuges nicht auf, so dass die Randschicht des Stahls eine vergleichsweise höhere Rissempfindlichkeit besitzt.

Der Unterschied in der Duktilität zwischen un- und beschichtetem Zustand, ausgedrückt durch den erreichbaren Biegewinkel, nimmt mit steigender Gesamtfestigkeit des Warmumformwerkstoffs zu. Überlagert mit der grundsätzlichen Tendenz, dass die Duktilität mit steigender Festigkeit grundsätzlich abnimmt, kann ein Zustand erreicht werden, in dem der Warmumformwerkstoff nur im unbeschichteten Zustand ein für Leichtbau interessantes mechanisches Eigenschaftsprofil erreicht

Dokument DE102014114365 offenbart ein mehrschichtiges Stahlflachprodukt bestehend aus einer Mehrzahl miteinander verbundener Stahllegierungsschichten, wobei in mindestens einer der Stahllegierungsschichten ein Stahl einer ersten Stahllegierung und in mindestens einer anderen der Stahllegierungsschichten ein Stahl einer zweiten Stahllegierung, die von der ersten Stahllegierung verschieden ist, vorgesehen ist, wobei der Stahl der ersten Stahllegierung ein Stahl mit hoher Festigkeit und der Stahl der zweiten Stahllegierung ein Stahl mit geringerer Festigkeit und einem geringeren Kohlenstoffanteil ist. Um eine funktionsoptimierte Modellierung lokaler Werkstoffeigenschaften in allen Richtungen zu ermöglichen, schlägt dieses Dokument vor, dass mindestens innerhalb einer Schicht (Blechebene) mindestens ein Stahl der ersten Stahllegierung und mindestens ein Stahl der zweiten Stahllegierung vorgesehen ist.

## Zusammenfassung der Erfindung

Aufgabe der vorliegenden Erfindung ist es, ein Warmumformmaterial bereitzustellen, welches zu einem vor Korrosion geschützten, höchstfesten Bauteil mit einer rissunempfindlicheren Randschicht gefertigt werden kann.

Gelöst wird diese Aufgabe durch ein Warmumformmaterial mit den Merkmalen des Patentanspruchs 1.

Um das Leichtbaupotenzial höchstfester Warmumformmaterialien nutzen zu können, insbesondere ohne auf spätere Zusatzmaßnahmen, wie ein Strahlen zur Zunderentfernung, zurückgreifen zu müssen und eine gewisse Barrierewirkung bezüglich Korrosion anbieten zu können, wird erfindungsgemäß ein Warmumformmaterial aus einem dreilagigen Werkstoffverbund vorgeschlagen, welcher eine Kernlage aus einem härtbaren Stahl, welcher im pressgehärteten Zustand eine Zugfestigkeit > 2000 MPa und/oder eine Härte > 600 HV10, bevorzugt eine Zugfestigkeit > 2100 MPa und/oder eine Härte > 630 HV10, weiter bevorzugt eine Zugfestigkeit > 2200 MPa und/oder eine Härte > 660 HV10, besonders bevorzugt eine Zugfestigkeit > 2300 MPa und/oder eine Härte > 685 HV10 aufweist, und zwei stoffschlüssig mit der Kernlage verbundene Decklagen aus einem weichen Stahl, welcher eine Zugfestigkeit aufweist, die höchstens einem Viertel der Zugfestigkeit der Kernlage im pressgehärteten Zustand entspricht, umfasst. Das Warmumformmaterial ist erfindungsgemäß ein- oder beidseitig mit einem Korrosionsschutzüberzug, insbesondere einem aluminiumbasierten Überzug versehen. Die beiden Decklagen dienen einzig dazu, dem oberflächennahen Bereich des Werkstoffverbundes eine einem Randentkohlen ähnliche rissunempfindlichere Randschicht zu verleihen, die den von monolithischen höchstfesten Warmumformstählen (Rm > 2000 MPa) bekannten Biegewinkelunterschied zwischen unbeschichtetem und mit einem Korrosionsschutzüberzug, insbesondere einem aluminiumbasierten Überzug versehenem Material kompensiert.

Im Sinne der Erfindung weist der weiche Stahl eine Zugfestigkeit die höchstens einem Viertel der Zugfestigkeit der Kernlage im pressgehärteten Zustand entspricht, bevorzugt < 600 MPa und/oder eine Härte < 190 HV10, insbesondere eine Zugfestigkeit < 550 MPa und/oder eine Härte < 175 HV10, vorzugsweise eine Zugfestigkeit < 450 MPa und/oder eine Härte < 140 HV10, besonders bevorzugt eine Zugfestigkeit < 380 MPa und/oder eine Härte < 120 HV10 auf. Der weiche Stahl weist Eigenschaften auf, die sich besonders positiv hinsichtlich einer Beschichtung und/oder Verformungsfähigkeit auszeichnet.

HV entspricht der Vickershärte und wird nach DIN EN ISO 6507-1:2005 bis -4: 2005 ermittelt.

Das erfindungsgemäße Warmumformmaterial kann somit in bestehende Standard-Prozesse der Warmumformung integriert werden, ohne Änderungen in der Prozesskette vornehmen zu müssen. Die Beschichtungsneigung und/oder Verformungsfähigkeit wird maßgeblich durch die Eigenschaften an der Oberfläche des Werkstoffverbundes bestimmt, die erfindungsgemäß durch die Decklagen quasi als Funktionsschicht bereitgestellt werden.

Das Warmumformmaterial kann band-, platten- oder blechförmig ausgeführt sein bzw. den weiteren Prozessschritten bereitgestellt werden.

Erfindungsgemäß besteht die Kernlage neben Fe und herstellungsbedingt unvermeidbaren Verunreinigungen in Gew.-% aus

C: 0,43 - 0,8 %,

Si: bis 0,5 %,

Mn: bis 2,0 %,

P: bis 0,06 %,

S: bis 0,05 %,

Al: bis 0,2 %,

Cr+Mo: bis 1,0 %,

Cu: bis 0,2%,

N: bis 0,01 %,
Nb+Ti: bis 0,2 %,
Ni: bis 0,5 %,
V: bis 0,2 %,
B: bis 0,01 %,
As: bis 0,02 %,
Ca: bis 0,01 %,
Co: bis 0,02 %,
Sn: bis 0,05 %.

C ist ein festigkeitssteigerndes Legierungselement und trägt mit zunehmendem Gehalt zur Festigkeitssteigerung bei, so dass ein Gehalt von mindestens 0,43 Gew.-%, bevorzugt von mindestens 0,48 Gew.-%, besonders bevorzugt zwischen 0,51 Gew.-% vorhanden ist, um die gewünschte Festigkeit zu erreichen bzw. einzustellen. Mit höherer Festigkeit nimmt auch die Sprödigkeit zu, so dass der Gehalt auf maximal 0,8 Gew.-%, insbesondere maximal 0,75 Gew.-%, vorzugsweise maximal 0,68 Gew.-%, weiter bevorzugt maximal 0,65 Gew.-%, weiter bevorzugt maximal 0,62 Gew.-%, besonders bevorzugt maximal 0,60 Gew.-% beschränkt ist, um die Werkstoffeigenschaften nicht negativ zu beeinflussen und eine ausreichende Schweißbarkeit sicherzustellen.

Si ist ein Legierungselement, das zur Mischkristallhärtung beitragen kann und kann sich je nach Gehalt positiv in einer Festigkeitssteigerung auswirken, so dass ein Gehalt von mindestens 0,05 Gew.-% vorhanden sein kann. Das Legierungselement ist auf maximal 0,5 Gew.-%, insbesondere maximal 0,45 Gew.-%, vorzugsweise maximal 0,4 Gew.-% beschränkt, um eine ausreichende Walzbarkeit sicherzustellen.

Mn ist ein Legierungselement, das zur Härtbarkeit beitragen kann und kann sich positiv auf die Zugfestigkeit auswirken, insbesondere zum Abbinden von S zu MnS, so dass ein Gehalt von mindestens 0,3 Gew.-% vorhanden sein kann. Das Legierungselement ist auf maximal 2,0 Gew.-%, insbesondere maximal 1,7 Gew.-%, vorzugsweise maximal 1,5 Gew.-% beschränkt, um eine ausreichende Schweißbarkeit sicherzustellen.

Al kann als Legierungselement zur Desoxidation beitragen, wobei ein Gehalt mit mindestens 0,01 Gew.-%, insbesondere mit 0,015 Gew.-% vorhanden sein kann. Das Legierungselement ist auf maximal 0,2 Gew.-%, insbesondere maximal 0,15 Gew.-%, vorzugsweise maximal 0,1 Gew.-% beschränkt, um Ausscheidungen im Werkstoff insbesondere in Form von nichtmetallischen oxidischen Einschlüssen im Wesentlichen zu reduzieren und/oder zu vermeiden, welche negativ die Werkstoffeigenschaften beeinflussen können. Beispielsweise kann der Gehalt zwischen 0,02 und 0,06 Gew.-% eingestellt werden.

Cr kann als Legierungselement je nach Gehalt auch zur Einstellung der Festigkeit, insbesondere positiv zur Härtbarkeit beitragen, mit einem Gehalt insbesondere von mindestens 0,05 Gew.-%. Das Legierungselement ist auf maximal 0,8 Gew.-%, insbesondere maximal 0,6 Gew.-%, vorzugsweise maximal 0,4 Gew.-% beschränkt, um eine ausreichende Schweißbarkeit sicherzustellen.

B kann als Legierungselement zur Härtbarkeit beitragen, insbesondere wenn N abgebunden wird und kann mit einem Gehalt von mindestens 0,0008 Gew.-% vorhanden sein. Das Legierungselement ist auf maximal 0,01 Gew.-%, insbesondere auf maximal 0,008 Gew.-% beschränkt, da höhere Gehalte sich nachteilig auf die Werkstoffeigenschaften auswirken und eine Reduzierung der Härte und/oder Festigkeit im Werkstoff zur Folge hätte.

Ti und Nb können als Legierungselemente einzeln oder in Kombination zur Kornfeinung und/oder N-Abbindung zulegiert werden, insbesondere wenn Ti mit einem Gehalt von mindestens 0,005 Gew.-% vorhanden ist. Zur vollständigen Abbindung von N wäre der Gehalt an Ti mit mindestens 3,42*N vorzusehen. Die Legierungselemente sind in Kombination auf maximal 0,2 Gew.-%, insbesondere maximal 0,15 Gew.-%, vorzugsweise maximal 0,1 Gew.-% beschränkt, da höhere Gehalte sich nachteilig auf die Werkstoffeigenschaften, insbesondere sich negativ auf die Zähigkeit des Werkstoffs auswirken.

Mo, V, Cu, Ni, Sn, Ca, Co, As, N, P oder S sind Legierungselemente, die einzeln oder in Kombination, wenn sie nicht gezielt zur Einstellung spezieller Eigenschaften zulegiert werden, zu den Verunreinigungen gezählt werden können. Die Gehalte sind beschränkt auf maximal 0,2 Gew.-% Mo, auf maximal 0,2 Gew.-% V, auf maximal 0,2 Gew.-% Cu, auf maximal 0,5 Gew.-% Ni, auf maximal 0,05 Gew.-% Sn, auf maximal 0,01 Gew.-% Ca, auf maximal 0,02 Gew.-% Co, auf maximal 0,02 Gew.-% As, auf maximal 0,01 Gew.-% N, auf maximal 0,06 Gew.-% P, auf maximal 0,05 Gew.-% S.

Die Decklagen übernehmen aufgrund ihrer chemischen Zusammensetzung unter dem aluminiumbasierten Überzug die Wirkung der Randentkohlung, indem sie im pressgehärteten Zustand eine im Vergleich zur Kernlage rissunempfindlichere Schicht im Werkstoffverbund unterhalb des aufgebrachten Überzugs ausbilden. Die Decklagen bestehen erfindungsgemäß neben Fe und herstellungsbedingt unvermeidbaren Verunreinigungen in Gew.-% aus

C: bis 0,06 %,
Si: bis 0,6 %,
Mn: bis 1,0 %,
P: bis 0,1 %,

S: bis 0,06 %,
Al: bis 0,2 %,
Cr+Mo: bis 0,5 %,
Cu: bis 0,3%,
N: bis 0,01 %,
Ni: bis 0,3 %,
Nb+Ti: bis 0,25 %,
V: bis 0,05 %,
B: bis 0,01 %,
Sn: bis 0,05 %,
Ca: bis 0,01 %,
Co: bis 0,02 %.

Zur Erhöhung der Verformbarkeit und/oder Beschichtbarkeit ist C als Legierungselement auf maximal 0,06 Gew.-%, insbesondere maximal 0,05 Gew.-%, vorzugsweise maximal 0,035 Gew.-% beschränkt, wobei C mit mindestens 0,001 Gew.-% vorliegt.

Si ist ein Legierungselement, das zur Mischkristallhärtung beitragen kann und sich positiv in einer Festigkeitssteigerung auswirken kann, so dass ein Gehalt von mindestens 0,01 Gew.-% vorhanden sein kann. Das Legierungselement ist auf maximal 0,6 Gew.-%, insbesondere maximal 0,5 Gew.-%, vorzugsweise maximal 0,4 Gew.-% beschränkt, um eine ausreichende Walzbarkeit und/oder Oberflächenqualität sicherzustellen.

Mn ist ein Legierungselement, das zur Härtbarkeit beitragen kann und sich positiv auf die Zugfestigkeit auswirken kann, insbesondere zum Abbinden von S zu MnS, so dass ein Gehalt von mindestens 0,1 Gew.-% vorhanden sein kann. Das Legierungselement ist auf maximal 1,0 Gew.-%, insbesondere maximal 0,95 Gew.-%, vorzugsweise maximal 0,9 Gew.-% beschränkt, um eine ausreichende Schweißbarkeit sicherzustellen.

Al kann als Legierungselement zur Desoxidation beitragen, wobei ein Gehalt mit mindestens 0,001 Gew.-%, insbesondere mit 0,0015 Gew.-% vorhanden sein kann. Al ist auf maximal 0,2 Gew.-%, insbesondere maximal 0,15 Gew.-%, vorzugsweise maximal 0,1 Gew.-%, beschränkt, um Ausscheidungen im Werkstoff insbesondere in Form von nichtmetallischen oxidischen Einschlüssen im Wesentlichen zu reduzieren und/oder zu vermeiden, welche negativ die Werkstoffeigenschaften beeinflussen können.

Cr kann als Legierungselement je nach Gehalt auch zur Einstellung der Festigkeit beitragen und kann mit einem Gehalt insbesondere von mindestens 0,01 Gew.-% vorhanden sein. Cr ist auf maximal 0,35 Gew.-%, insbesondere maximal 0,3 Gew.-%, vorzugsweise maximal 0,25 Gew.-% beschränkt, um eine im Wesentlichen vollständige Beschichtbarkeit der Oberfläche gewährleisten zu können.

B kann als Legierungselement zur Härtbarkeit beitragen, insbesondere wenn N abgebunden wird und kann mit einem Gehalt insbesondere von mindestens 0,0002 Gew.-% vorhanden sein. Das Legierungselement ist auf maximal 0,01 Gew.-%, insbesondere auf maximal 0,005 Gew.-% beschränkt, da höhere Gehalte sich nachteilig auf die Werkstoffeigenschaften auswirken und eine Reduzierung der Härte und/oder Festigkeit im Werkstoff zur Folge hätte.

Ti und Nb können als Legierungselemente einzeln oder in Kombination zur Kornfeinung und/oder N-Abbindung zulegiert werden, mit Gehalten insbesondere von mindestens 0,001 Gew.-% Ti und/oder von mindestens 0,001 Gew.-% Nb. Zur vollständigen Abbindung von N wäre der Gehalt an Ti mit mindestens 3,42*N vorzusehen. Die Legierungselemente sind in Kombination auf maximal 0,25 Gew.-%, insbesondere maximal 0,2 Gew.-%, vorzugsweise maximal 0,15 Gew.-% beschränkt, da höhere Gehalte sich nachteilig auf die Werkstoffeigenschaften, insbesondere sich negativ auf die Zähigkeit des Werkstoffs auswirken.

Mo, V, Cu, Ni, Sn, Ca, Co, N, P oder S sind Legierungselemente, die einzeln oder in Kombination, wenn sie nicht gezielt zur Einstellung spezieller Eigenschaften zulegiert werden, zu den Verunreinigungen gezählt werden können. Die Gehalte sind beschränkt auf maximal 0,15 Gew.-% Mo, auf maximal 0,05 Gew.-% V, auf maximal 0,3 Gew.-% Cu, auf maximal 0,3 Gew.-% Ni, auf maximal 0,05 Gew.-% Sn, auf maximal 0,01 Gew.-% Ca, auf maximal 0,02 Gew.-% Co, auf maximal 0,01 Gew.-% N, auf maximal 0,1 Gew.-% P, auf maximal 0,06 Gew.-%S.

Gemäß einer weiteren Ausgestaltung des Warmumformmaterials weisen die Decklagen jeweils eine Materialdicke zwischen 0,5 % und 20 %, insbesondere zwischen 1 % und 10 % bezogen auf die Gesamtmaterialdicke des Warmumformmaterials auf. Die Decklagen sollten in ihrer Materialdicke derart bemessen sein, das zum einen die positiven Eigenschaften der Kernlage nicht wesentlich negativ beeinflusst werden, wobei die Materialdicken der Decklagen (pro Seite) auf maximal 20 %, insbesondere auf maximal 15 %, vorzugsweise auf maximal 10 %, besonders bevorzugt auf maximal 4% bezogen auf die Gesamtmaterialdicke des Warmumformmaterials beschränkt ist, um so das aus dem Festigkeitsniveau abzuleitende Leichtbaupotenzial sicher zu stellen, wobei versucht wird die (Gesamt-) Festigkeit des Werkstoffverbundes möglichst nah an dem Niveau des höchstfesten Kernlagenwerkstoffes als monolithisches Material zu halten. Zum anderen weist die Kernlage einen gewissen Abstand zur Oberfläche des Warmumformmaterials auf, sodass eine im Vergleich zur Kernlage rissunempfindlichere Schicht bereitgestellt wird, wobei die Materialdicke der Decklage (pro Seite) mindestens 0,5 %, insbesondere mindestens 1 %, vorzugsweise mindestens 2 % bezogen auf die Gesamtmaterialdicke des Warmumformmaterials beträgt. Das Warmumformmaterial respektive der dreilagige Werkstoffverbund weist eine Gesamtmaterialdicke zwischen 0,6 und 8,0 mm, insbesondere zwischen 1,2 und 5,0 mm und vorzugsweise zwischen 1,5 und 4,0 mm auf.

Gemäß einer weiteren Ausgestaltung des Warmumformmaterials ist der Werkstoffverbund mittels Plattieren, insbesondere Walzplattieren, vorzugsweise Warmwalzplattieren oder mittels Gießen hergestellt. Bevorzugt ist das erfindungsgemäße Warmumformmaterial mittels Warmwalzplattieren, wie es beispielsweise in der deutschen Patentschrift DE 10 2005 006 606 B3 offenbart ist, hergestellt. Alternativ kann das erfindungsgemäße Warmumformmaterial mittels Gießen hergestellt werden und eine Möglichkeit zu seiner Herstellung in der japanischen Offenlegungsschrift JP-A 03 133 630 offenbart ist. Die metallische Werkstoffverbundherstellung ist allgemein aus dem Stand der Technik bekannt. Bedingt durch eine thermische Beaufschlagung, sei es beispielsweise während der Werkstoffverbundherstellung, vorzugsweise im Zuge des Warmwalzplattierens und im Zuge des Presshärtens, tritt eine Diffusion von C von der Kernlage in Richtung Decklage auf. Je dünner die Decklage also ist, desto eher erreicht die Aufkohlung aus dem Kern heraus die Oberfläche des Warmumformmaterials und führt zu einem Anstieg des Biegewinkelabfalls. Um die Differenz in Bezug auf den Unterschied des im Zustand mit und ohne Korrosionsschutzüberzug möglichst gering zu halten, ist gemäß einer weiteren Ausgestaltung des Warmumformmaterials das Verhältnis vom C-Gehalt der Kernlage zum C-Gehalt der Decklage > 4, insbesondere > 5, vorzugsweise > 6, besonders bevorzugt > 7, weiter bevorzugt > 8, um dadurch das Ziel mit einem geringeren Abfall der (Gesamt-) Festigkeit des Warmumformmaterials erreichen zu können.

Gemäß einer weiteren Ausgestaltung des Warmumformmaterials erfüllt das Warmumformmaterial folgende Beziehung in Bezug auf den Unterschied des im Drei-Punkt-Biegeversuch nach VDA 238-100 ermittelten Biegewinkels ($\Delta BW$) im Zustand mit und ohne Korrosionsschutzüberzug:

$$\Delta BW < 17° * F, \text{ mit } F = \frac{Zugfestigkeit\ (Kernlage)}{1500\ MPa} \text{ als dimensionslose Festigkeitsrelation.}$$

Zur Berechnung der dimensionslosen Festigkeitsrelation F wird die Zugfestigkeit der Kernlage im dreilagigen Warmumformmaterial mit einem als Referenz dienender monolithischer Warmumformstahl verglichen, der der konventionell eingesetzten Güte 22MnB5 mit einer Zugfestigkeit von 1500 MPa entspricht. Der Zielbereich des Warmumformmaterials liegt bei einem Biegewinkelunterschied in ° unterhalb von 17° * F. Liegt der Biegewinkelunterschied oberhalb von 17° * F, bedeutet dies, dass das Warmumformmaterial mit Korrosionsschutzüberzug im Vergleich zum ungeschützten Material zu spröde wird und daraus kein ausreichendes, wirtschaftliches Leichtbaupotential zur Verfügung steht.

Gemäß einem zweiten Aspekt betrifft die Erfindung ein Bauteil hergestellt aus einem erfindungsgemäßen Warmumformmaterials mittels Presshärten, insbesondere zur Herstellung einer Komponente für den Automobilbau, Eisenbahn-, Schiffbau oder Luft- und Raumfahrt. Durch die Decklagen ist eine im Vergleich zur Kernlage rissunempfindlichere Schicht ausgebildet, so dass das mit einem aluminiumbasierten Überzug versehene Bauteil einen verbesserten Biegewinkel im Vergleich zu einem monolithischen Warmumformstahl, der die gleiche Legierungszusammensetzung wie die Kernlage des erfindungsgemäßen Warmumformmaterials aufweist, hat.

Gemäß einem dritten Aspekt betrifft die Erfindung eine Verwendung eines Bauteils hergestellt aus dem erfindungsgemäßen Warmumformmaterial in einer Karosserie oder im Fahrwerk eines landgebundenen Fahrzeugs. Hierbei handelt es sich vorzugsweise um Personenkraftwagen, Nutzfahrzeuge oder Busse, sei es mit Verbrennungsmotor, rein elektrisch betriebene oder hybridbetriebene Fahrzeuge. Die Bauteile können als Längs- oder Querträger oder Säulen im landgebundenen Fahrzeug verwendet werden, beispielsweise sind sie als Profile ausgebildet, insbesondere als Crashprofil im Stoßfänger, Schweller, Seitenaufprallträger oder in Bereichen, in denen keine bis geringe Deformationen/Intrusionen im Crashfall gefordert werden.

Nachfolgend wird die vorliegende Erfindung anhand einer Figur und Beispielen näher erläutert.

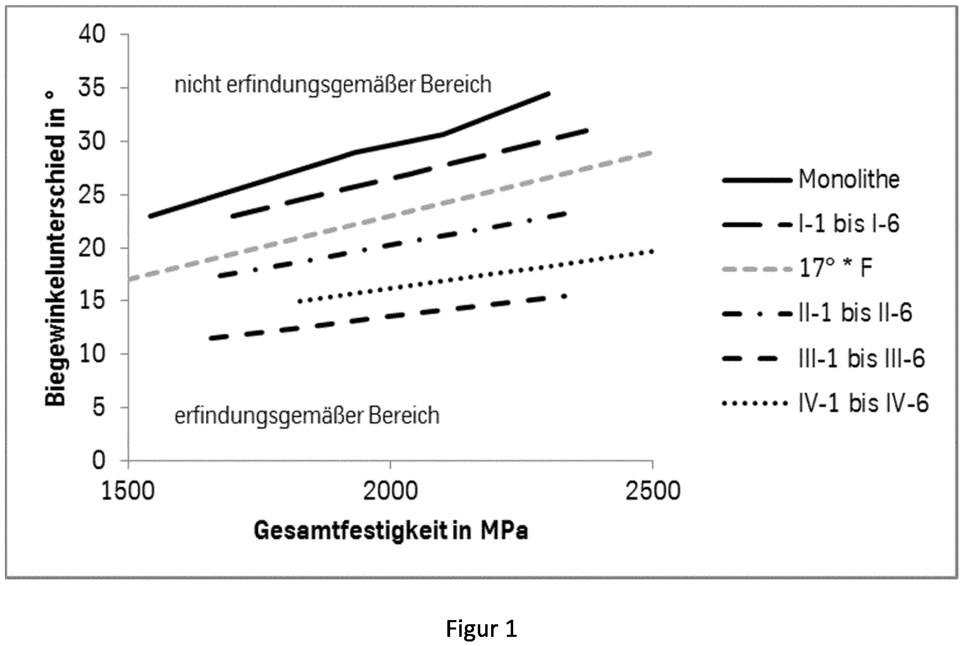

Fig. 1    zeigt Ergebnisse, die anhand eines Plättchenbiegetest gemäß VDA 238-100 an unterschiedlichen Proben ermittelt wurden.

**Beispiele**

Aus handelsüblichen Stahlflachprodukten wurden mittels Warmwalzplattieren Warmumformmaterialien erzeugt, die einen dreilagigen Werkstoffverbund aufwiesen. Als Decklagen D1-D3 wurden die in Tabelle 1 und als Kernlagen K1-K6 wurden die in Tabelle 2 angegebenen Stähle verwendet. Die Kernlagen K1 und K2 bzw. die mit den Kernlagen K1 und K2 erzeugten Warmumformmaterialien entsprachen nicht der erfindungsgemäßen Ausführung. Die aufgeführten Zugfestigkeiten in den Tabellen 1 und 2 beziehen sich auf den pressharten Zustand. Insgesamt wurden 24 unterschiedliche Warmumformmaterialien (I-1 bis IV-6) zusammengestellt, siehe Tabelle 3. Bei 18 der Warmumformmaterialien (I-1 bis III-6) wiesen die Decklagen jeweils eine Materialdicke von 10 % je Seite bezogen auf die Gesamtmaterialdicke des Warmumformmaterials auf, die Materialdicken der Decklagen bei den Warmumformmaterialien (IV-1 bis IV-6) hingegen betrugen nur jeweils 5% je Seite bezogen auf die Gesamtmaterialdicke des Warmumformmaterials.

Dabei wurden jeweils Blechzuschnitte mit zwei Decklagen und einer dazwischen angeordneten Kernlage aufeinandergestapelt, welche zumindest bereichsweise entlang ihrer Kanten stoffschlüssig, vorzugsweise mittels Schweißen zu einem Vorverbund miteinander verbunden wurden. Der Vorverbund wurde auf Temperatur > 1200°C gebracht und in mehreren Schritten zu einem Werkstoffverbund mit einer Gesamtdicke von 3 mm warmgewalzt und zu Kaltband mit 1,5 mm weiterverarbeitet. Der Werkstoffverbund respektive das Warmumformmaterial wurde beidseitig mit einem aluminiumbasierten Überzug, einem AlSi-Überzug mit jeweils einer Schichtdicke von 20 μm beschichtet. Die Schichtdicken können zwischen 5 und 30 μm betragen.

Aus den hergestellten Warmumformmaterialien (I-1 bis IV-6) wurden Platinen abgeteilt. Neben den Warmumformmaterialien wurden auch sechs mit AlSi-beschichtete Stähle und sechs unbeschichtete Stähle als Referenz bereitgestellt, die den Zusammensetzungen in Tabelle 2 entsprachen, sprich Kernlagen ohne Decklagen mit einer Dicke von 1,5 mm. Die Platinen wie auch die beschichteten und unbeschichteten monolithischen Stähle wurden auf Austenitisierungstemperatur, insbesondere oberhalb von $A_{c3}$ (bezogen auf die Kernlage) in einem Ofen für jeweils ca. 6 min erwärmt und durchwärmt und wurden anschließend in einem gekühlten Werkzeug jeweils zu gleichen Bauteilen warm umgeformt und abgekühlt. Die Abkühlraten lagen bei > 30 K/s. Die Kernlagen waren über die Dicke im Wesentlichen vollständig aus Martensit, wobei im Übergangsbereich zur Decklage zusätzlich Ferrit und/oder Bainit enthalten sein kann. In den Decklagen hatte sich ein Mischgefüge mit Anteilen an Ferrit, Bainit und teilweise Martensit eingestellt.

Aus den pressgehärteten Bauteilen wurden Proben ausgeschnitten, welche einem Plättchenbiegetest gemäß VDA 238-100 unterzogen wurden. Die Ergebnisse sind in Fig. 1 zusammengestellt. Fig. 1 zeigt ein Diagramm, in dem auf der x-Achse die Gesamtzugfestigkeit in [MPa] und auf der y-Achse der Biegewinkelunterschied in [°] gegenüber den unbeschichteten Proben eingetragen sind. Es ist zu erkennen, dass die mit einem aluminiumbasierten Überzug (AlSi) beschichteten, monolithischen pressgehärteten Proben aus Kernmaterialien mit steigender Festigkeit im Vergleich zu den unbeschichteten Referenzen den größten Biegewinkelunterschied zeigen. Die Werte der pressgehärteten Proben aus den erfindungsgemäßen Warmumformmaterialien liegen einheitlich unter den monolithischen pressgehärteten Proben aus Kernmaterialien. Die Ausführungen I-1 bis I-6 weisen einen zu hohen, den ebenfalls dargestellten monolithischen Warmumformwerkstoffen zu ähnlichen Biegewinkelunterschied auf, weil die Decklage der Ausführungen I-1 bis I-6 einen C-Gehalt >= 0,07 Gew.-% hat. Bedingt durch die thermische Beaufschlagung tritt hier eine Diffusion von C von der Kernlage in Richtung Decklage auf und vermindert die Wirkung der weichen Decklage. Bei den Ausführungen II-1 und IV-6 ist dagegen der C-Gehalt der Decklagen geringer als bei den Ausführungen I-1 bis I-6, wodurch ein höheres Potential zur Aufkohlung im Sinne eines Puffers vorliegt. Dadurch stellt sich ein geringerer Biegewinkelunterschied ein. Der C-Gehalt in der Decklage liegt bei höchstens 0,06 Gew.-%, insbesondere höchstens 0,05 Gew.-%. Durch die nachfolgende Beziehung lassen sich erfindungsgemäße Warmumformmaterialien (s. erfindungsgemäßer Bereich in Fig. 1) von nicht erfindungsgemäßen Ausführungen abgrenzen:

$$\Delta BW < 17° * F, \text{ mit } F = \frac{Zugfestigkeit\ (Kernlage)}{1500\ MPa}.$$

Die Erfindung ist nicht auf die dargestellten Ausführungsbeispiele sowie auf die Ausführungen in der allgemeinen Beschreibung beschränkt. Vielmehr kann das Warmumformmaterial auch Teil eines Tailored Product sein, beispielsweise als Teil eines Tailored Welded Blank und/oder Tailored Rolled Blank.

Tabelle 1

|   | C | Si | Mn | P | S | Al | Cr | Nb | Ti | B | Rm [MPa] |
|---|---|---|---|---|---|---|---|---|---|---|---|
| D3 | 0,003 | 0,02 | 0,13 | 0,01 | 0,012 | 0,0325 | 0,05 | 0,005 | 0,007 | 0,0004 | 305 |
| D2 | 0,0375 | 0,04 | 0,25 | 0,015 | 0,015 | 0,04 | 0,06 | 0,004 | 0,004 | 0,0006 | 319 |
| D1 | 0,07 | 0,205 | 0,8 | 0,02 | 0,006 | 0,04 | 0,075 | 0,02 | 0,004 |  | 458 |

Tabelle 2

| | C | Si | Mn | P | S | Al | Cr | Ni | Nb | Ti | V | B | Ca | Rm [MPa] |
|---|---|---|---|---|---|---|---|---|---|---|---|---|---|---|
| K1 | 0,35 | 0,25 | 1,3 | 0,01 | 0,0015 | 0,035 | 0,14 | | 0,0015 | 0,0325 | | 0,0028 | | 1911 |
| K2 | 0,42 | 0,225 | 1,3 | 0,02 | 0,003 | 0,035 | 0,35 | | 0,003 | 0,0275 | | 0,003 | 0,0013 | 2093 |
| K3 | 0,45 | 0,07 | 0,62 | 0,01 | 0,004 | 0,04 | 0,22 | | 0,002 | 0,026 | | 0,003 | | 2304 |
| K4 | 0,48 | 0,22 | 1,2 | 0,01 | 0,002 | 0,035 | 0,24 | | 0,002 | 0,03 | | 0,0032 | 0,002 | 2400 |
| K5 | 0,53 | 0,23 | 1,19 | 0,01 | 0,003 | 0,03 | 0,58 | 0,2 | 0,002 | 0,025 | 0,02 | 0,003 | | 2518 |
| K6 | 0,61 | 0,39 | 1,6 | 0,01 | 0,003 | 0,04 | 0,73 | | 0,0025 | 0,03 | | 0,0035 | 0,002 | 2731 |

Tabelle 3

| Ausführung | Kernlage | Anteil | Decklage | Anteil (je Seite) |
|---|---|---|---|---|
| I-1 | K1 | 80% | D1 | 10% |
| I-2 | K2 | | | |
| I-3 | K3 | | | |
| I-4 | K4 | | | |
| I-5 | K5 | | | |
| I-6 | K6 | | | |
| II-1 | K1 | | D2 | |
| II-2 | K2 | | | |
| II-3 | K3 | | | |
| II-4 | K4 | | | |
| II-5 | K5 | | | |
| II-6 | K6 | | | |
| III-1 | K1 | | D3 | |
| III-2 | K2 | | | |
| III-3 | K3 | | | |
| III-4 | K4 | | | |
| III-5 | K5 | | | |
| III-6 | K6 | | | |
| IV-1 | K1 | 90% | D3 | 5% |
| IV-2 | K2 | | | |
| IV-3 | K3 | | | |
| IV-4 | K4 | | | |
| IV-5 | K5 | | | |
| IV-6 | K6 | | | |

**Patentansprüche**

1. Warmumformmaterial aus einem dreilagigen Werkstoffverbund, umfassend eine Kernlage aus einem härtbaren Stahl, welcher im pressgehärteten Zustand eine Zugfestigkeit > 2000 MPa und/oder eine Härte > 600 HV10 aufweist, und zwei stoffschlüssig mit der Kernlage verbundene Decklagen aus einem weichen Stahl, welcher eine Zugfestigkeit aufweist, die höchstens einem Viertel der Zugfestigkeit der Kernlage im pressgehärteten Zustand entspricht, und ein- oder beidseitig mit einem Korrosionsschutzüberzug, insbesondere einem aluminiumbasierten Überzug versehen ist, wobei die Kernlage neben Fe und herstellungsbedingt unvermeidbaren Verunreinigungen in Gew.-% aus

C: 0,43 - 0,8 %,
Si: bis 0,5 %,
Mn: bis 2,0 %,
P: bis 0,06 %,
S: bis 0,05 %,
Al: bis 0,2 %,
Cr+Mo: bis 1,0 %,
Cu: bis 0,2%,

N: bis 0,01 %,
Nb+Ti: bis 0,2 %,
Ni: bis 0,5 %,
V: bis 0,2 %,
B: bis 0,01 %,
As: bis 0,02 %,
Ca: bis 0,01 %,
Co: bis 0,02 %,
Sn: bis 0,05 %
besteht und wobei die Decklagen neben Fe und herstellungsbedingt unvermeidbaren Verunreinigungen in Gew.-% aus
C: bis 0,06 %,
Si: bis 0,6 %,
Mn: bis 1,0 %,
P: bis 0,1 %,
S: bis 0,06 %,
Al: bis 0,2 %,
Cr+Mo: bis 0,5 %,
Cu: bis 0,3%,
N: bis 0,01 %,
Ni: bis 0,3 %,
Nb+Ti: bis 0,25 %,
V: bis 0,05 %,
B: bis 0,01 %,
Sn: bis 0,05 %,
Ca: bis 0,01 %,
Co: bis 0,02 %
bestehen.

2. Warmumformmaterial nach einem der vorgenannten Ansprüche, wobei die Kernlage einen C-Gehalt zwischen 0,43 - 0,65 Gew.-%, bevorzugt zwischen 0,48 - 0,62 Gew.-%, besonders bevorzugt zwischen 0,51 - 0,60 Gew.-% aufweist.

3. Warmumformmaterial nach einem der vorgenannten Ansprüche, wobei die Decklagen jeweils eine Materialdicke zwischen 0,5 % und 20 %, insbesondere zwischen 1 % und 10 % bezogen auf die Gesamtmaterialdicke des Warmumformmaterials aufweisen.

4. Warmumformmaterial nach einem der vorgenannten Ansprüche, wobei der Werkstoffverbund mittels Plattieren oder mittels Gießen hergestellt ist.

5. Warmumformmaterial nach einem der vorgenannten Ansprüche, wobei das Verhältnis vom C-Gehalt der Kernlage zum C-Gehalt der Decklage > 4, insbesondere > 5, vorzugsweise > 6, besonders bevorzugt > 7 ist.

6. Warmumformmaterial nach einem der vorgenannten Ansprüche, wobei das Warmumformmaterial folgende Beziehung in Bezug auf den Unterschied des im Drei-Punkt-Biegeversuch nach VDA 238-100 ermittelten Biegewinkels ($\Delta BW$) im Zustand mit und ohne Korrosionsschutzüberzug erfüllt:

$\Delta BW < 17° * F$, mit $F = \dfrac{Zugfestigkeit\ (Kernlage)}{1500\ MPa}$ als dimensionslose Festigkeitsrelation.

7. Bauteil, hergestellt aus einem Warmumformmaterial nach einem der vorgenannten Ansprüche mittels Presshärten, wobei die Kernlage über die Dicke im Wesentlichen vollständig aus Martensit ist und wobei der Übergangsbereich zur Decklage zusätzlich Ferrit und/oder Bainit enthalten kann.

8. Verwendung des Bauteils nach Anspruch 7 in einer Karosserie oder im Fahrwerk eines landgebundenen Fahrzeugs.

**Claims**

1. Hot-working material composed of a three-layer composite material, comprising a core layer of a hardenable steel which in the press-hardened state has a tensile strength > 2000 MPa and/or a hardness > 600 HV10, and two outer layers bonded substance-to-substance with the core layer and composed of a soft steel which has a tensile strength corresponding at most to one quarter of the tensile strength of the core layer in the press-hardened state, and provided on one or both sides with an anticorrosion coating, more particularly an aluminium-based coating, where the core layer, besides Fe and unavoidable production-related impurities, in wt%, consists of
C: 0.43-0.8%,
Si: up to 0.5%,
Mn: up to 2.0%,
P: up to 0.06%,
S: up to 0.05%,
Al: up to 0.2%,
Cr+Mo: up to 1.0%,
Cu: up to 0.2%,
N: up to 0.01%,
Nb+Ti: up to 0.2%,
Ni: up to 0.5%,
V: up to 0.2%,
B: up to 0.01%,
As: up to 0.02%,
Ca: up to 0.01%,
Co: up to 0.02%,
Sn: up to 0.05%
and where the outer layers, besides Fe and unavoidable production-related impurities, in wt%, consist of
C: up to 0.06%,
Si: up to 0.6%,
Mn: up to 1.0%,
P: up to 0.1%,
S: up to 0.06%,
Al: up to 0.2%,
Cr+Mo: up to 0.5%,
Cu: up to 0.3%,
N: up to 0.01%,
Ni: up to 0.3%,
Nb+Ti: up to 0.25%,
V: up to 0.05%,
B: up to 0.01%,
Sn: up to 0.05%
Ca: up to 0.01%,
Co: up to 0.02%.

2. Hot-working material according to any of the preceding claims, where the core layer has a C content between 0.43-0.65 wt%, preferably between 0.48-0.62 wt%, very preferably between 0.51-0.60 wt%.

3. Hot-working material according to any of the preceding claims, where the outer layers each have a thickness of material of between 0.5% and 20%, more particularly between 1% and 10%, based on the total material thickness of the hot-working material.

4. Hot-working material according to any of the preceding claims, where the composite material has been produced by means of cladding or by means of casting.

5. Hot-working material according to any of the preceding claims, where the ratio of the C content of the core layer to the C content of the outer layer is > 4, more particularly > 5, preferably > 6, very preferably > 7.

6. Hot-working material according to any of the preceding claims, where the hot-working material satisfies the following relationship in relation to the difference of the bending angle ($\Delta BW$) determined in a VDA 238-100 three-point bending test, in the condition with and without anticorrosion coating:

$\Delta BW < 17° * F$, where $F = \dfrac{tensile\ strength\ (core\ layer)}{1500\ MPa}$ as dimensionless strength relation.

7. Component produced from a hot-working material according to any of the preceding claims by means of press hardening, where the core layer over the thickness is composed substantially entirely of martensite and where the transition region to the outer layer may additionally have ferrite and/or bainite present therein.

8. Use of the component according to Claim 7 in a bodywork or in the chassis of a land vehicle.


**Revendications**

1. Matériau de formage à chaud en un composite de matériau tricouche, comprenant une couche de noyau en un acier durcissable, qui présente à l'état durci à la presse une résistance à la traction > 2 000 MPa et/ou une dureté > 600 HV10, et deux couches de recouvrement, reliées par accouplement de matière avec la couche de noyau, en un acier doux, qui présente une résistance à la traction qui correspond au plus à un quart de la résistance à la traction de la couche de noyau à l'état durci à la presse, et qui est muni d'un ou des deux côtés d'un revêtement anticorrosion, notamment d'un revêtement à base d'aluminium, la couche de noyau étant constituée, outre du Fe et des impuretés inévitables liées à la fabrication, en % en poids par :

C : 0,43 à 0,8 %,
Si : jusqu'à 0,5 %,
Mn : jusqu'à 2,0 %,
P : jusqu'à 0,06 %,
S : jusqu'à 0,05 %,
Al : jusqu'à 0,2 %,
Cr+Mo : jusqu'à 1,0%,
Cu : jusqu'à 0,2 %,
N : jusqu'à 0,01 %,
Nb+Ti : jusqu'à 0,2 %,
Ni : jusqu'à 0,5 %,
V : jusqu'à 0,2 %,
B : jusqu'à 0,01 %,
As : jusqu'à 0,02 %,
Ca : jusqu'à 0,01 %,
Co : jusqu'à 0,02 %,
Sn : jusqu'à 0,05 %,

et les couches de recouvrement étant constituées, outre du Fe et des impuretés inévitables liées à la fabrication, en % en poids par :

C : jusqu'à 0,06 %,
Si : jusqu'à 0,6 %,
Mn : jusqu'à 1,0 %,
P : jusqu'à 0,1 %,
S : jusqu'à 0,06 %,
Al : jusqu'à 0,2 %,
Cr+Mo : jusqu'à 0,5 %,
Cu : jusqu'à 0,3 %,
N : jusqu'à 0,01 %,
Ni : jusqu'à 0,3 %,
Nb+Ti : jusqu'à 0,25 %,
V : jusqu'à 0,05 %,
B : jusqu'à 0,01 %,
Sn : jusqu'à 0,05 %,
Ca : jusqu'à 0,01 %,

Co : jusqu'à 0,02 %.

2. Matériau de formage à chaud selon l'une quelconque des revendications précédentes, dans lequel la couche de noyau présente une teneur en C comprise entre 0,43 et 0,65 % en poids, de préférence entre 0,48 et 0,62 % en poids, de manière particulièrement préférée entre 0,51 et 0,60 % en poids.

3. Matériau de formage à chaud selon l'une quelconque des revendications précédentes, dans lequel les couches de recouvrement présentent chacune une épaisseur de matériau comprise entre 0,5 % et 20 %, notamment entre 1 % et 10 %, par rapport à l'épaisseur de matériau totale du matériau de formage à chaud.

4. Matériau de formage à chaud selon l'une quelconque des revendications précédentes, dans lequel le composite de matériau est fabriqué par placage ou par coulage.

5. Matériau de formage à chaud selon l'une quelconque des revendications précédentes, dans lequel le rapport entre la teneur en C de la couche de noyau et la teneur en C de la couche de recouvrement est > 4, notamment > 5, de préférence > 6, de manière particulièrement préférée > 7.

6. Matériau de formage à chaud selon l'une quelconque des revendications précédentes, dans lequel le matériau de formage à chaud satisfait la relation suivante au regard de la différence entre l'angle de flexion calculé dans l'essai de flexion à trois points selon VDA 238-100 ($\Delta BW$) dans l'état avec et sans revêtement anticorrosion :

$$\Delta BW < 17° * F,$$

avec

$$F = \frac{\text{résistance à la traction (couche de noyau)}}{1\ 500\ MPa}$$

en tant que relation sans dimension entre des résistances.

7. Composant, fabriqué à partir d'un matériau de formage à chaud selon l'une quelconque des revendications précédentes par durcissement à la presse, dans lequel la couche de noyau est essentiellement entièrement constituée par de la martensite sur l'épaisseur et dans lequel la zone de transition vers la couche de recouvrement peut en outre contenir de la ferrite et/ou de la bainite.

8. Utilisation du composant selon la revendication 7 dans une carrosserie ou dans le châssis d'un véhicule terrestre.

Figur 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014114365
- DE 102005006606 B3

- JP 03133630 A